# FASCICULE DE BREVET EUROPEEN

(11) **EP 0 802 525 B1**
(45) Date de publication et mention de la délivrance du brevet: **02.07.2003**
(21) Numéro de dépôt: 97201014.4
(22) Date de dépôt: 07.04.1997
(51) Int. Cl.: G11B 5/40, G11B 5/39, G11B 5/02

(54) **Système de lecture d'informations magnétiques muni d'un détecteur d'aspérités thermiques**
System zum Lesen von magnetischen Informationen mit Detektor für thermische Unebenheiten
System for reading magnetic information including a detector for thermal asperity

(30) Priorité: 17.04.1996 FR 9604801
(43) Date de publication de la demande: 22.10.1997
(73) Titulaire: Koninklijke Philips Electronics N.V., 5621 BA Eindhoven (NL)
(72) Inventeur: Le Luan, 75008 Paris (FR); Desbonnets, Eric, 75008 Paris (FR)
(74) Mandataire: Charpail, François

(56) Documents cités:
- EP-A- 0 353 852
- EP-A- 0 439 299
- GB-A- 2 281 654
- US-A- 5 216 561
- US-A- 5 351 003
- PATENT ABSTRACTS OF JAPAN vol. 011, no. 147 (P-575), 14 Mai 1987 & JP 61 284819 A (HITACHI LTD), 15 Décembre 1986,
- PATENT ABSTRACTS OF JAPAN vol. 018, no. 253 (P-1737), 13 Mai 1994 & JP 06 034645 A (MATSUSHITA ELECTRIC IND CO LTD), 10 Février 1994,

## Description

La présente invention concerne un système de lecture d'informations magnétiques comportant au moins une tête de lecture munie de deux barreaux magnéto-résistifs dont les résistivités électriques varient de manière opposée l'une de l'autre lorsqu'ils sont soumis à une même variation de champ magnétique, chaque barreau magnéto-résistif présentant une première et une deuxième bornes, la première borne étant reliée à une borne négative d'alimentation, la deuxième borne, dite borne de sortie du barreau magnéto-résistif, étant reliée par l'intermédiaire d'une source de courant à une borne positive d'alimentation, la tête de lecture étant munie en outre d'un amplificateur différentiel à deux entrées, chacune d'elles étant reliée à la borne de sortie d'un des barreaux magnéto-résistifs.

Un tel système de lecture est connu du brevet US n° 5,420,736. Ce système de lecture est, en théorie, insensible à un contact accidentel entre la tête de lecture et un corps étranger ou une aspérité qui se trouverait sur la surface où sont stockées les informations. En effet, lorsqu'un tel événement, appelé "aspérité thermique", se produit, il provoque une brusque augmentation de la résistivité des barreaux magnéto-résistifs. Par conséquent, une brusque augmentation de tension apparaît alors à la borne de sortie de chacun des barreaux magnéto-résistifs. Les augmentations de résistivité étant de même amplitude pour les deux barreaux magnéto-résistifs, les augmentations de tension sont également de même amplitude. L'amplificateur différentiel qui reçoit les tensions des bornes de sortie des barreaux magnéto-résistifs ayant un fort taux de réjection en mode commun, ces augmentations identiques de chacune des tensions d'entrée de l'amplificateur différentiel seront ignorées.

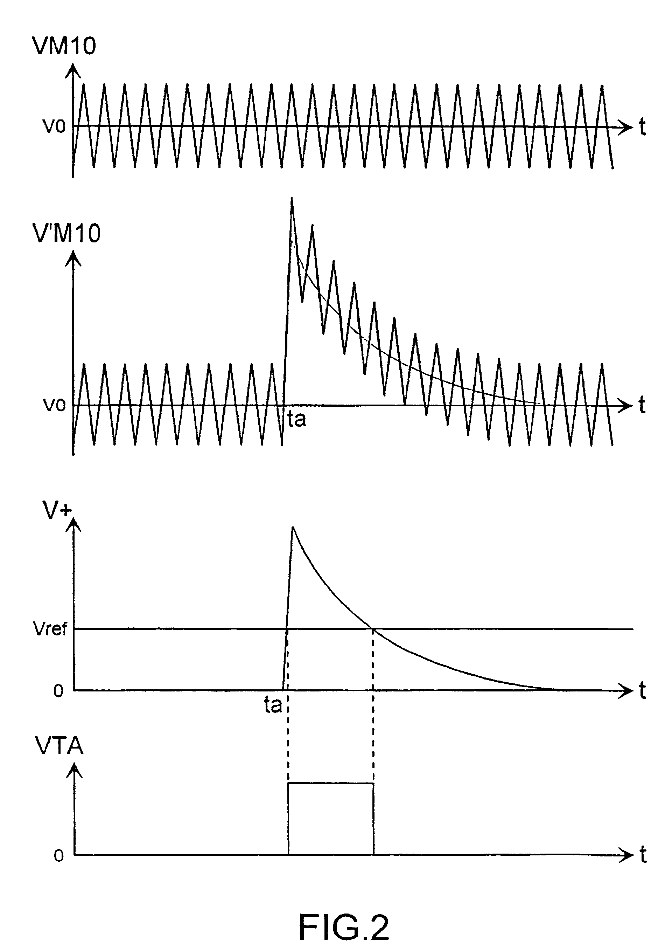

En vertu de l'article 54(3) et (4) CBE, le contenu de EP-A-0785555 est considéré comme faisant partie de l'état de la technique à prendre en compte seulement au titre de la nouveauté pour les états DE, FR et GB. Mais cette demande ne décrit pas que la sortie de l'amplificateur est reliée via une deuxième capacité de liaison, à une entrée du comparateur (v. col.9 l.26-31 et fig.2).

Il est toutefois utile de garder trace de tels événements. Des contacts trop violents ou répétés de la tête de lecture avec des corps étrangers ou des aspérités qui se trouveraient sur la surface où sont stockées les informations sont susceptibles d'endommager la tête de lecture, ou, à tout le moins, de provoquer des erreurs dans la lecture ou encore d'altérer les informations stockées aux endroits ou les contacts se produisent. Un dispositif de commande pilotant le système de lecture peut, s'il est informé d'une aspérité thermique, choisir d'ignorer les informations lues à l'endroit où cet évènement s'est produit, ou commander à la tête de lecture d'éviter à l'avenir l'endroit où cet événement a eu lieu, ou encore reconfigurer le stockage des informations de manière à ce qu'il ne soit plus nécessaire d'amener la tête de lecture à cet endroit. La présente invention a donc pour but de permettre au système de lecture de détecter et de signaler les aspérités thermiques.

En effet, un système de lecture selon l'invention est caractérisé en ce qu'il comporte un module, dit module de détection, présentant deux entrées et une sortie, chacune de ces entrées étant reliée à la borne de sortie d'un des barreaux magnéto-résistifs, module de détection incluant deux résistances de valeurs sensiblement égales, un amplificateur à une entrée et une sortie et un comparateur à deux entrées et une sortie, chaque résistance ayant une borne connectée à une entrée du module de détection, les autres bornes des résistances étant reliées ensemble et formant un noeud dit noeud commun, lequel noeud commun est relié, via une première capacité de liaison, à l'entrée de l'amplificateur, amplificateur dont la sortie est reliée, via une deuxième capacité de liaison, à une entrée du comparateur, lequel reçoit sur son autre entrée une tension dite de référence, la sortie du comparateur constituant la sortie du module de détection.

L'amplitude de la variation de tension provoquée par une aspérité thermique aux bornes des barreaux magnéto-résistifs peut varier de 25 à 200 % de l'amplitude nominale des variations de tension provoquées par les variations des valeurs des informations magnétiques rencontrées au cours du fonctionnement normal du système de lecture. L'effet de l'aspérité thermique est d'autant plus important que le contact entre la tête de lecture et l'aspérité ou le corps étranger est violent. L'ajustement de la tension de référence permet de déterminer le seuil de tolérance aux aspérités thermiques.

Dans un mode de réalisation particulier de l'invention, un système de lecture tel que décrit ci-dessus est caractérisé en ce que le module de détection comporte un registre programmable, dit registre de référence, présentant N sorties et un convertisseur numérique/analogique présentant N entrées et une sortie, le registre de référence contenant une représentation numérique de la tension de référence, les N sorties du registre de référence étant reliées aux N entrées du convertisseur numérique/analogique, convertisseur dont la sortie est reliée à celle des entrées du comparateur qui est destinée à recevoir la tension de référence.

Un tel mode de réalisation permet un réglage flexible, par exemple par voie logicielle, du seuil de tolérance aux aspérités thermiques du système de lecture.

La plupart des systèmes de lecture d'informations magnétiques mettent en oeuvre plusieurs têtes de lecture, réparties de manière à permettre un accès aussi rapide que possible à toute zone de la surface où sont stockées les informations. A un instant t, seule la tête de lecture dédiée à la zone où se trouvent les informations dont la lecture a été demandée par le dispositif de commande est effectivement active et exposée à une éventuelle aspérité thermique.

Un mode de réalisation avantageux de l'invention présente donc un système de lecture tel que décrit ci-dessus, caractérisé en ce qu'il comporte P têtes de lecture, où P est supérieur ou égal à 2, et un module, dit module de sélection, présentant P paires de bornes d'entrée et une paire de bornes de sortie, module de sélection comportant un registre programmable, dit registre de sélection, présentant K sorties et un décodeur présentant K entrées et P sorties, les K sorties du registre de sélection étant reliées aux K entrées du décodeur, module de sélection comportant P paires d'interrupteurs, commandées chacune par l'une des P sorties du décodeur, chaque paire d'interrupteurs présentant un paire d'entrées et une paire de sorties, les P paires d'entrées des interrupteurs étant reliées aux P paires de bornes d'entrée du module de sélection, chacune des P paires de sorties des P paires d'interrupteurs étant reliée aux deux bornes de sortie du module de sélection, chacune des P paires de bornes d'entrée du module de sélection étant reliée aux bornes de sortie des barreaux magnéto-résistifs de chacune des P têtes de lecture, les deux bornes de sortie du module de sélection étant reliées aux deux entrées du module de détection.

Un tel système de lecture ne nécessite donc l'utilisation que d'un seul module de détection pour l'ensemble des têtes de lecture. Le dispositif de commande, en même temps qu'il détermine celle des têtes de lecture qui doit être utilisée pour mener à bien l'opération de lecture, peut effectuer par voie logicielle la sélection des bornes de sortie des barreaux magnéto-résistifs correspondants, en chargeant dans le registre de sélection la valeur numérique qui permettra au décodeur de commander les P paires d'interrupteurs de sorte que seuls les signaux présents aux bornes de sortie des barreaux magnéto-résistifs de la tête de lecture active parviennent au module de détection.

L'invention sera mieux comprise à l'aide de la description suivante de quelques modes de réalisation, faite à titre d'exemple et en regard des dessins annexés, dans lesquels :
- la figure 1 est un schéma fonctionnel partiel d'un système de lecture conforme à l'invention,
- la figure 2 est un ensemble de courbes illustrant l'évolution de différents signaux présents dans un système de lecture conforme à l'invention,et
- la figure 3 est un schéma fonctionnel partiel d'un système de lecture conforme à un mode de réalisation avantageux de l'invention.

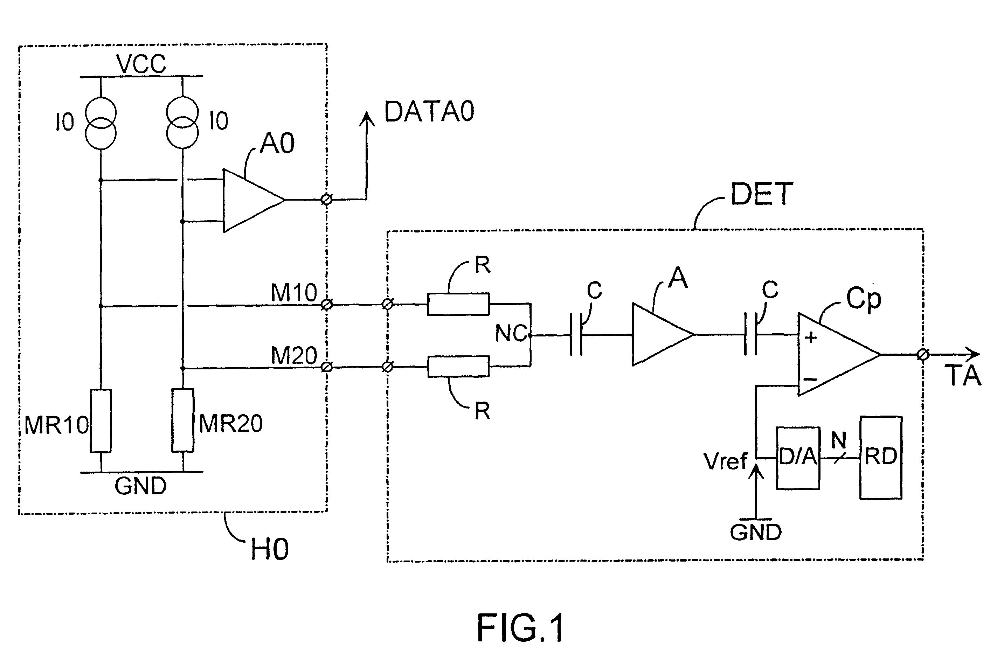

La figure 1 représente partiellement un système de lecture d'informations magnétiques conforme à l'invention. Un tel système de lecture comporte au moins une tête de lecture H0 munie de deux barreaux magnéto-résistifs (MR10, MR20) dont les résistivités électriques (RMR10, RMR20) varient de manière opposée l'une de l'autre lorsqu'ils sont soumis à une même variation de champ magnétique. Chaque barreau magnéto-résistif (MR10, MR20) présente une première et une deuxième bornes. La première borne est reliée à une borne négative d'alimentation GND, la deuxième borne (M10, M20), dite borne de sortie du barreau magnéto-résistif, est reliée par l'intermédiaire d'une source de courant I0 à une borne positive d'alimentation VCC. La tête de lecture H0 est munie en outre d'un amplificateur différentiel A0 à deux entrées, chacune d'elles étant reliée à la borne de sortie (M10, M20) d'un des barreaux magnéto-résistifs. Le système de lecture comporte un module DET, dit module de détection, présentant deux entrées et une sortie. Chacune de ces entrées est reliée à la borne de sortie (M10, M20) d'un des barreaux magnéto-résistifs. Le module de détection inclut deux résistances R de valeurs sensiblement égales, un amplificateur A à une entrée et une sortie et un comparateur Cp à deux entrées et une sortie. Chaque résistance R a une borne connectée à une entrée du module de détection, les autres bornes des résistances sont reliées ensemble et forment un noeud NC dit noeud commun. Le noeud commun NC est relié, via une première capacité de liaison C, à l'entrée de l'amplificateur A, dont la sortie est reliée, via une deuxième capacité de liaison C, à une entrée du comparateur Cp, lequel reçoit sur son autre entrée une tension Vref dite de référence. La sortie du comparateur Cp constitue la sortie du module de détection DET. Le module de détection DET comporte en outre un registre programmable RD, dit registre de référence, présentant N sorties et un convertisseur numérique/analogique D/A présentant N entrées et une sortie. Le registre de référence RD contient une représentation numérique de la tension de référence Vref. Les N sorties du registre de référence RD sont reliées aux N entrées du convertisseur numérique/analogique D/A, convertisseur dont la sortie est reliée à celle des entrées du comparateur Cp qui est destinée à recevoir la tension de référence Vref.

La figure 2 a pour but de montrer l'évolution de différents signaux présents dans un système de lecture conforme à l'invention. Le signal VM10 représente la tension que fournit la borne M10 dans le cadre du fonctionnement normal du système de lecture. Cette tension présente des oscillations autour d'une valeur constante V0. Si RMR10=RMR20=RMR, alors V0=RMR.I0. Les oscillations sont représentatives des variations locales du champ magnétique auxquelles est soumise la tête de lecture H0 au cours de son déplacement au-dessus de la surface sur laquelle sont stockées les informations. Un signal VM20, non représenté ici, qui illustrerait l'évolution de la tension fournie par la borne M20 présenterait, autour de la même valeur constante V0, des oscillations semblables à celles de VM10, mais en opposition de phase avec ces dernières. Le signal V'M10 représente la tension que fournit la borne M10 lorsqu'une aspérité thermique se produit. Cette tension présente des oscillations autour de V0 jusqu'à l'instant ta, où l'aspérité thermique provoque une brusque augmentation de la résistivité du barreau magnéto-résistif MR10, qui se traduit par une brusque augmentation de la tension de sortie dudit barreau. La résistivité du barreau magnéto-résistif MR10 est par ailleurs toujours dépendante des variations locales du champ magnétique auxquelles est soumise la tête de lecture H0 au cours de son déplacement au-dessus de la surface sur laquelle sont stockées les informations. Le signal V'M10 présente donc toujours des oscillations, mais cette fois autour d'une tension qui présente un pic avant de décroître progressivement vers V0. On a représenté ici, pour une meilleure compréhension, un cas extrême où l'amplitude de la variation de tension provoquée par l'aspérité thermique est de l'ordre de 200 % de l'amplitude nominale des variations de tension provoquées par les variations des valeurs des informations magnétiques rencontrées au cours du fonctionnement normal du système de lecture. Un signal V'M20, non représenté ici, qui illustrerait l'évolution de la tension fournie par la borne M20 dans le même cas de figue présenterait, autour de la même valeur constante V0 jusqu'à l'instant ta, puis autour du même pic de tension décroissant progressivement vers V0, des oscillations semblables à celles de V'M10, mais en opposition de phase avec ces dernières. Le signal V+ représente la tension que reçoit le comparateur sur sa borne non-inverseuse, ainsi que la tension de référence Vref. Les résistances incluses dans le module de détection ayant une même valeur R, les oscillations en opposition de phase s'annulent mutuellement et la tension que fournit le noeud commun NC est la résultante de la tension constante V0 à laquelle s'ajoute le pic de tension dù à l'aspérité thermique. La première capacité de liaison élimine la composante continue, et donc la tension constante V0. L'amplificateur A amplifie le signal représentatif de l'aspérité thermique. La deuxième capacité de liaison a pour fonction d'éliminer toute composante continue qu'aurait pu faire naître cette amplification. Le signal V+ ainsi obtenu est alors comparé à la tension de référence Vref par le comparateur Cp. Cette valeur Vref détermine un seuil au delà duquel les effets de l'aspérité thermique seront pris en compte. Elle caractérise donc le degré significatif de l'aspérité thermique. Dès que V+ dépasse Vref, le signal VTA fourni par la sortie TA du module de détection passe au niveau logique "1", signalant ainsi qu'une aspérité thermique significative a été détectée.

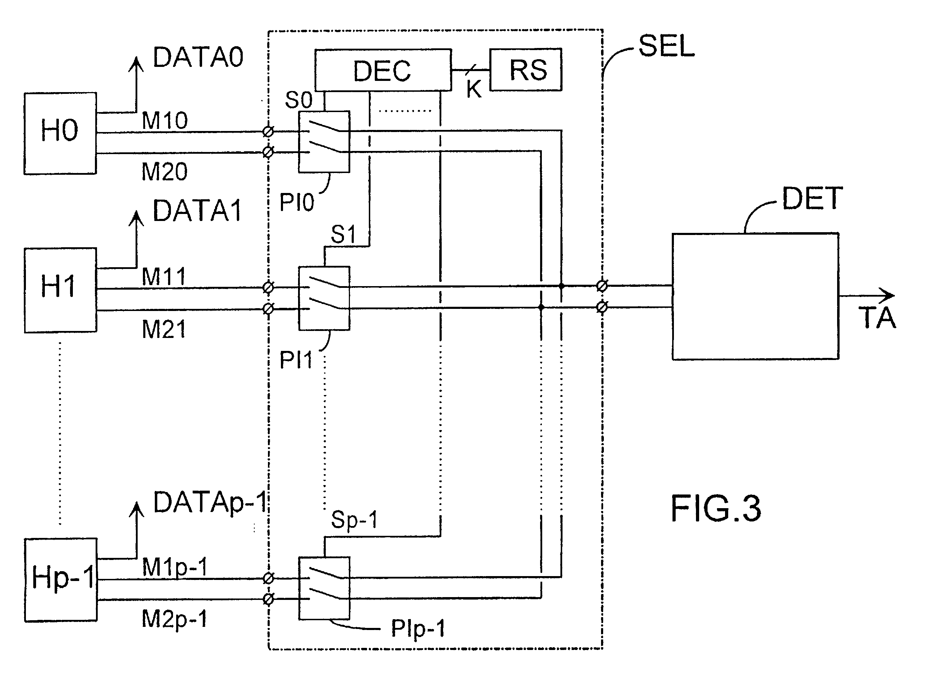

La figure 3 représente partiellement un système de lecture conforme à un mode de réalisation avantageux de l'invention. Un tel système de lecture comporte P têtes de lecture (H0...Hp-1), où P est supérieur ou égal à 2, et un module SEL, dit module de sélection, présentant P paires de bornes d'entrée et une paire de bornes de sortie. Le module de sélection SEL comporte un registre programmable RS, dit registre de sélection, présentant K sorties et un décodeur DEC présentant K entrées et P sorties (S0...Sp-1). Les K sorties du registre de sélection RS sont reliées aux K entrées du décodeur DEC. Le module de sélection SEL comporte P paires d'interrupteurs (PI0...PIp-1), commandées chacune par l'une des P sorties (S0...Sp-1) du décodeur DEC. Chaque paire d'interrupteurs (PI0...PIp-1) présente un paire d'entrées et une paire de sorties, les P paires d'entrées des interrupteurs sont reliées aux P paires de bornes d'entrée du module de sélection. Chacune des P paires de sorties des P paires d'interrupteurs (PI0...PIp-1) est reliée aux deux bornes de sortie du module de sélection. Chacune des P paires de bornes d'entrée du module de sélection est reliée aux bornes de sortie ((M1j, M2j) pour j=0 à p-1) des barreaux magnéto-résistifs de chacune des P têtes de lecture (H0...Hp-1). Les deux bornes de sortie du module de sélection SEL sont reliées aux deux entrées du module de détection DET. Dans un tel système de lecture, le registre de sélection RS contient la valeur numérique qui permettra au décodeur DEC de commander les P paires d'interrupteurs (PI0...PIp-1) de sorte que seuls les signaux présents aux bornes de sortie des barreaux magnéto-résistifs de la tête de lecture active parviennent au module de détection.

## Revendications

1. Système de lecture d'informations magnétiques comportant au moins une tête de lecture (H0) munie de deux barreaux magnéto-résistifs (MR10,MR20), dont les résistivités électriques (RMR10, RMR20) varient de manière opposée l'une de l'autre lorsqu'ils sont soumis à une même variation de champ magnétique, chaque barreau magnéto-résistif (MR10,MR20) présentant une première et une deuxième bornes, la première borne étant, reliée à une borne négative d'alimentation (GND), la deuxième borne (M10, M20), dite borne de sortie du barreau magnéto-résistif, étant reliée par l'intermédiaire d'une source de courant (I0) à une borne positive d'alimentation (VCC), la tête de lecture (H0) étant munie en outre d'un amplificateur différentiel (A0) à deux entrées, chacune d'elles étant reliée à la borne de sortie (M10,M20) d'un des barreaux magnéto-résistifs, (MR10,MR20), système de lecture **caractérisé en ce qu'**il comporte un module (DET), dit module de détection, présentant deux entrées et une sortie, chacune de ces entrées étant reliée à la borne de sortie (M10,M20) d'un des barreaux magnéto-résistifs, module de détection incluant deux résistances (R) de valeurs sensiblement égales, un amplificateur (A) à une entrée et une sortie et un comparateur (Cp) à deux entrées et une sortie, chaque résistance (R) ayant une borne connectée à une entrée du module de détection, les autres bornes des résistances étant reliées ensemble et formant un noeud dit noeud commun (NC), lequel noeud commun (NC) est relié, via une première capacité de liaison, à l'entrée de l'amplificateur (A), amplificateur dont la sortie est reliée via une deuxième capacité de liaison, à une entrée du comparateur (Cₚ), lequel reçoit sur son autre entrée une tension dite de référence (V_{ref}), la sortie du comparateur constituant la sortie du module de détection.

2. Système de lecture selon la revendication 1, **caractérisé en ce que** le module de détection comporte un registre programmable (RD), dit registre de référence, présentant N sorties et un convertisseur numérique/analogique (D/A) présentant N entrées et une sortie, le registre de référence (RD) contenant une représentation numérique de la tension de référence, les N sorties du registre de référence (RD) étant reliées aux N entrées du convertisseur numérique/analogique (RD), convertisseur dont la sortie est reliée à celle des entrées du comparateur (Cₚ) qui est destinée à recevoir la tension de référence (V_{ref}).

3. Système de lecture selon l'une quelconque des revendications 1 ou 2, **caractérisé en ce qu'**il comporte P têtes de lecture, (H0-Hp-1), ou est supérieur ou égal à 2, et un module, dit module de sélection, présentant P paires de bornes d'entrée et une paire de bornes de sortie, module de sélection (SEL) comportant un registre programmable, dit registre de sélection (RS), présentant K sorties et un décodeur (DEC) présentant K entrées et P sorties, les K sorties du registre de sélection étant reliées aux K entrées du décodeur (DEC), module de sélection comportant P paires d'interrupteurs (PI0-PIp-1), commandées chacune par l'une des P sorties du décodeun (DEC), chaque paire d'interrupteurs (PI0-PIp-1) présentant un paire d'entrées et une paire de sorties, les P paires d'entrées des interrupteurs étant reliées aux P paires de bornes d'entrée du module de sélection, chacune des P paires de sorties des P paires d'interrupteurs étant reliée aux deux bornes de sortie du module de sélection, chacune des P paires de bornes d'entrée du module de sélection étant reliée aux bornes de sortie des barreaux magnéto-résistifs de chacune des P têtes de lecture, les deux bornes de sortie du module de sélection étant reliées aux deux entrées du module de détection.

## Patentansprüche

1. System zum Lesen von magnetischen Informationen mit mindestens einem Lesekopf (40), versehen mit zwei magnet-resistiven Stäben (MR10, MR20), deren elektrischen Resistivitäten (RMR10, RMR20) entgegengesetzt zueinander variieren, wenn sie einer selben Magnetfeldveränderung ausgesetzt werden, wobei jeder magnet-resistive Stab (MR10, MR20) eine erste und eine zweite Klemme aufweist, die erste Klemme mit einer negativen Versorgungsklemme (GND) versehen ist, die zweite Klemme (M10, M20), die sogenannte Ausgangsklemme des magnet-resistiven Stabs über eine Stromquelle (IO) mit einer positiven Versorgungsquelle (VCC) verbunden ist, der Lesekopf (40) zusätzlich mit einem Differenzialverstärker (AO) mit zwei Eingängen versehen ist, die jeweils mit der Ausgangsklemme (M10, M20) einer der magnet-resistiven Stäbe (MR10, MR20) verbunden sind, **dadurch gekennzeichnete**s Lesesystem, dass es ein Modul (DET) enthält, ein sogenanntes Detektionsmodul, das zwei Eingänge und einen Ausgang aufweist, wobei jeder dieser Eingänge mit der Ausgangsklemme (M10, M20) einer der magnet-resistiven Stäbe verbunden ist, das Detektionsmodul zwei Widerstände (R) weitgehend gleichen Werts aufweist, ein Verstärker (A) einen Eingang und einen Ausgang hat und ein Vergleicher (Cp) zwei Eingänge und einen Ausgang hat, jeder Widerstand (R) eine an einen Eingang des Detektionsmoduls angeschlossene Klemme hat, die anderen Klemmen der Widerstände zusammen verbunden sind und einen Knoten bilden, den sogenannten gemeinsamen Knoten (NC), welcher gemeinsame Knoten (NC) über eine erste Verbindungskapazität mit dem Eingang des Verstärkers (A) verbunden ist, der Ausgang des Verstärkers über eine zweite Verbindungskapazität mit einem Eingang des Vergleichers (Cp) verbunden ist, der an seinem anderen Eingang eine sogenannte Bezugsspannung (Vref) erhält, und der Ausgang des Vergleichers den Ausgang des Detektionsmoduls bildet.

2. Lesesystem nach Anspruch 1, **dadurch gekennzeichnet, dass** das Detektionsmodul ein programmierbares Register (RD) enthält, ein sogenanntes Bezugsregister, mit N Ausgängen und einem Digital/Analog-Umsetzer (D/A) mit N Eingängen und einem Ausgang, wobei das Bezugsregister (RD) eine digitale Darstellung der Bezugsspannung enthält, die N Ausgänge des Bezugsregisters (RD) mit den N Eingängen des Digital/Analog-Umsetzers (RD) verbunden sind, ein Umsetzer, dessen Ausgang mit dem der Eingänge des Vergleichers (Cp) verbunden ist, der für den Erhalt der Bezugsspannung (Vref) bestimmt ist.

3. Lesesystem nach einem der beliebigen Ansprüche 1 oder 2, **dadurch gekennzeichnet, dass** es P Leseköpfe (HO-Hp-1) aufweist, wobei P größer als oder gleich 2 ist, und ein Modul, ein sogenanntes Auswahlmodul, mit P Eingangsklemmenpaaren und einem Ausgangsklemmenpaar, wobei das Auswahlmodul (SEL) ein programmierbares Register enthält, ein sogenanntes Auswahlregister (RS), mit K Ausgängen und einem Dekodierer (DEC) mit K Eingängen und P Ausgängen, wobei die K Ausgänge des Auswahlregisters mit den K Eingängen des Dekodierers (DEC) verbunden sind, das Auswahlmodul P Unterbrecherpaare (PIO-PIp-1) enthält, die jeweils von einem der P Ausgänge des Dekodierers (DEC) gesteuert werden, jedes Unterbrecherpaar (PIO-PIp-1) ein Eingangspaar und ein Ausgangspaar aufweist, die P Eingangspaare der Unterbrecher mit den P Eingangsklemmenpaaren des Auswahlmoduls verbunden sind, jedes der P Ausgangspaare der P Unterbrecherpaare mit den beiden Ausgangsklemmen des Auswahlmoduls verbunden ist, jedes der P Eingangsklemmenpaare des Auswahlmoduls mit den Ausgangsklemmen der magnet-resistiven Stäbe jeder der P Leseköpfe verbunden ist, und die beiden Ausgangsklemmen des Auswahlmoduls mit den beiden Eingängen des Detektionsmoduls verbunden sind.

## Claims

1. A reading system for magnetic information comprising at least one read head (H0) provided with two magnetoresistive rods (MR10, MR20) whose electrical resistivities vary in opposite senses from one another when they are submitted to a same variation in magnetic field, each magnetoresistive rod (MR10, MR20) having a first and a second connection terminal, the first connection terminal being connected to a negative supply terminal (GND), the second connection terminal (M10, M20), called output terminal of the magnetoresistive rod, being connected via a current source (10) to a positive supply terminal (VCC), which read head (H0) is in addition provided with a differential amplifier (A0) having two inputs, each of which is connected to the output terminal (M10, M20) of one of the magnetoresistive rods (MR10, MR20), which reading system is **characterized in that** it comprises a detection module (DET) having two inputs and one output, each of said inputs being connected to the output terminal (M10, M20) of one of the magnetoresistive rods, which detection module comprises two resistors (R) of substantially equal resistance value, an amplifier (A) having one input and one output, and a comparator (Cp) having two inputs and one output, each resistor (R) having a connection terminal connected to an input of the detection module, the other terminals of the resistors being connected jointly and forming a common junction point (NC), which common junction point (NC) is connected via a first series capacitor to the input of the amplifier (A), whose output is connected via a second series capacitor to an input of the comparator (Cp), whose other input receives a reference voltage (Vref), the output of said comparator forming the output of the detection module.

2. A reading system as claimed in Claim 1, **characterized in that** the detection module comprises a programmable reference register (RD) having N outputs and a digital/analog converter (D/A) having N inputs and one output, said reference register (RD) containing a digital representation of the reference voltage, while the N outputs of the reference register (RD) are connected to the N inputs of the digital/analog converter (D/A), whose output is connected to that one of the inputs of the comparator (Cp) which is to receive the reference voltage (Vref).

3. A reading system as claimed in Claim 1 or 2, **characterized in that** it comprises P read heads (H0 ... Hp-1), P being higher than or equal to 2, and a selection module (SEL) having P pairs of input terminals and two output terminals, which selection module (SEL) comprises a programmable selection register (RS) having K outputs, and a decoder (DEC) having K inputs and P outputs, the K outputs of the selection register being connected to the K inputs of the decoder (DEC), and which selection module comprises P pairs of switches (PI0 ... PIp-1) which are each controlled by one of the P outputs of the decoder (DEC), each pair of switches (PI0 ... PIp-1) having a pair of inputs and a pair of outputs, the P pairs of inputs of the switches being connected to the P pairs of input terminals of the selection module, while each of the P pairs of outputs of the P pairs of switches is connected to the two output terminals of the selection module, each of the P pairs of input terminals of the selection module being connected to output terminals of the magnetoresistive rods of each of the P read heads, and the two output terminals of the selection module being connected to the two inputs of the detection module.
